# EUROPEAN PATENT SPECIFICATION

(11) **EP 2 366 298 B1**
(45) Date of publication and mention of the grant of the patent: **05.06.2013**
(21) Application number: 11158768.9
(22) Date of filing: 18.03.2011
(51) Int. Cl.: A42B 3/18, G02C 3/02

(54) **An eyewear assembly for attachment to a hard hat**
Brillenanordnung zur Befestigung an einem Helm
Ensemble formant lunettes pour être fixé à un casque

(30) Priority: 19.03.2010 AU 2010201075
(43) Date of publication of application: 21.09.2011
(73) Proprietor: RPS International Marketing Pty Ltd, Townsville, QLD 4710 (AU)
(72) Inventor: Millios, Peter Pantelos, Townsville, QLD 4710 (AU)
(74) Representative: Franks & Co Limited

(56) References cited:
- CA-A1- 2 601 414
- FR-A5- 2 061 366
- US-A1- 2007 024 805
- US-A1- 2008 084 531
- US-A1- 2009 013 439
- US-B1- 7 207 673

## Description

### Field of the Invention

The present invention relates to eyewear with a mount to attach to a hard hat, more particularly one whose eyewear can be, when not in use, pivoted so as to be close to a lower side of the visor thereof.

### Brief Description of the Prior art

People usually wear hard hats to prevent injury on work sites. Furthermore, people usually wear sunglasses to protect the eyes from the sun's damaging rays.

When people leave the site and take off the sunglasses, they can put the sunglasses in their clothing pockets, on top of their hats or in their handbags. No matter which one of the above ways is used, there is risk of the sunglasses getting damaged. Further, the sunglasses are prone to fall off if they are positioned on top of hats.

Other inventors have attempted to produce devices in order to provide consumers with at least a partial solution to the abovementioned problems. For example, the inventor in International Patent Application No. WO 96/28986 provides a hat body adapted to be fitted over the scalp of a wearer and having a flexible head band to engage about the forehead of the wearer. The hat has a brim affixed adjacent the head band with a portion projecting forwardly in use in front of and above the wearer's eyes. The invention of this prior art article was said to lie in that there is secured to the head band beneath the front brim portion a flexible tinted sunglass sheet adapted to be arranged in operative disposition substantially upright and arcuately around the front of the head band in front of the wearer's eyes when the hat body is fitted over the wearer's scalp, and the tinted sunglass sheet is so shaped and so secured at its upper edge to the flexible head band that upon removal of the hat body, the sunglass sheet and head band may be flexed to permit the sunglass sheet to be moved flexibly in the rearwards direction from said operative disposition to a stored inoperative disposition within the hat body in which the sunglass sheet will extend upwards from the head band and be held adjacent the scalp when the hat body is re-fitted to the wearer.

The sunglasses of this particular configuration are also fixed to the hat so that if a user wears a different hat, there may be no sunglasses with the second hat.

The sunglasses of the prior art are not easily adaptable to be used with a hard hat either. As a person skilled in the art would recognize, a significant problem exists with the provision of a moveable sunglass assembly for a hard hat. The potential solutions of the prior art are limited mainly due to the fact that once formed, attachment openings to attach a sunglass assembly cannot be formed in a hard hat without weakening the hard hat and endangering the wearer. In fact, many jurisdictions have compliance regimes which require destruction of a hard hat found with even one small opening formed therein after the hard hat has been cast.

US 2009/013439 discloses a pair of safety glasses for attaching to the visor of a hard hat. The mounting means comprises two forward projecting arms with deformable attachment portions at the distal ends, such that the mounting means is clamped to the visor of the hard hat by the deformable attachment portions. The safety glasses may be rotated by means of pivot members from a use position in front of the wearer's eyes to a storage position adjacent to the visor.

The present invention is therefore directed toward providing an eyewear assembly which is removably attachable to a hard hat and which may be adjustable in position both relative to the hat and relative to a user's face.

### Summary of the Invention

It is an object of the invention to provide a set of eyewear with a mount to attach to a hard hat to overcome the abovementioned problems.

In one form, the invention resides in an eyewear assembly for attachment to a hard hat, the hard hat including a main body and a visor, the eyewear assembly including at least one eyewear member, a mounting means to attach the set of eyewear to the headwear including an arcuate body adapted to substantially correspond to the shape of the visor of the hard hat, a rearwardly projecting locating tongue and at least one deformable attachment portion such that the mounting means is clamped to the visor of the hard hat by the at least one deformable attachment portion and at least one rotation mechanism associated with the mounting means and the eyewear to allow movement of the at least one eyewear member relative to the at least one mounting means between a use position in front of a wearer's eyes and a stored position adjacent the visor of the headwear.

There will typically be two main parameters for properly or ideally locating the eyewear relative to a user's face, namely the spacing between the eyewear and the face and the angle of the eyewear relative to a user's face.

The visor or brim will preferably be arcuate. The visor will typically have side edges and a front edge but there will generally not be a clear delineation between the two due to the curvature of the visor. The side edges will generally extend forwardly of the main body of the hard hat and typically from a base edge of the main body of the hard hat. The side edges are generally in the same plane as the base edge of the main body of the hard hat. As the side edge extends forwardly, the edge typically curves upwardly and inwardly to form the front edge of the visor.

Preferably, the set of eyewear may be or include a unitary tinted sunglass sheet. This sunglass sheet is typically made from sheet material of uniform thickness, being of elongated form and symmetrical to each side of a middle nose-bridging portion. The eyewear-shaped portions will preferably have curved lower edges at each side of the nose-bridging portion. In one embodiment, the flexible tinted sunglass sheet has resilient cheek-contact members fitted to the lower edges of both eyewear-shaped portions. The flexible tinted sunglass sheet may also have a resilient nose-contact member fitted to the lower edge of the nose-bridging portion, the resilient contact members preferably being made of foam rubber.

In the alternative, the set of eyewear may be formed with two separated eyewear members supported by a frame and a central nose-bridging portion. The frame may surround each of the eyewear members.

The eyewear may be or include corrective eyewear or safety glasses to protect the eye from flying debris. Although safety lenses may be constructed from a variety of materials that vary in impact resistance, certain standards suggest that they maintain a minimum 1 millimetre thickness at the thinnest point, regardless of material. Safety glasses can vary in the level of protection they provide. For example, those used in medicine may be expected to protect against blood splatter while safety glasses in a factory might have stronger lenses and a stronger frame with additional shields at the temples. The lenses of safety glasses can also be shaped for correction.

Some safety glasses are designed to fit over corrective glasses or sunglasses. They may provide less eye protection than goggles, face shields or other forms of eye protection, but their light weight increases the likelihood that they will actually be used.

Preferably, the pair of eyewear will not include a pair of earstems extending rearwardly from the face frame as these may impede the movement of the glasses.

According to a particularly preferred embodiment of the invention, the flexible tinted sunglass sheet is preferably formed by cutting same from a sheet of polycarbonate material, the sunglass sheet suitably having a thickness between 0.25mm and 0.5mm.

The mounting system used to at least temporarily mount the eyeglass assembly relative to the hard hat will include at least one mounting means to mount the eyewear relative to the hard hat and at least one rotation mechanism suitable to attach the frame of the glasses (and thereby, the glasses themselves) to the mounting means for movement. More than one rotation mechanism may be provided and of so, typically one is located to either lateral side of the frame.

In this manner, the mounting means (and the attached eyewear) can be positioned on the headwear at an appropriate position to correctly space the eyewear from a user's face, and then attached to the headwear with the rotation mechanisms allowing movement of the eyewear between a storage condition wherein the glasses are away from the user's face and a use condition in which the glasses are in front of a user's eyes.

The mounting means will therefore preferably include two main components, namely a mounting portion to support the eyewear relative to the headwear and a rotation mechanism for securing the eyewear relative to the mounting portion and allowing rotation movement of the eyewear relative to the mounting portion.

Preferably, the mounting portion will be attachable to the headwear and will support at least one of the attachment and rotation mechanisms.

The mounting means/portion includes an arcuate body adapted to substantially correspond to the shape of the visor of the hard hat, a rearwardly projecting locating tongue and at least one deformable attachment portion such that the mounting means is clamped to the visor of the hard hat by the at least one deformable attachment portion.

The body of the mounting means will substantially correspond with the shape of the visor or brim of the hard hat or at least a forward portion thereof. Typically, the body includes a substantially straight forward edge, which in use, will extend forwardly of the front edge of the visor. The body normally also includes arcuate corners and substantially straight side edges. The side edges are typically located beneath the visor of the hard hat, with the overall width of the mounting means typically being less than the width of the visor of the hard hat.

In use, the body will be substantially coplanar with the visor of hard hat.

Normally, the visor is slightly curved when viewed from the front and the body will preferably be correspondingly curved. Normally, at least a portion of the upper surface of the body will abut the underside of the visor.

The mounting means also includes a rearwardly projecting locating tongue which preferably extends rearwardly from the body. Typically, the locating tongue will be positioned below the visor when the assembly is attached to the hard hat.

Preferably, the locating tongue extends rearwardly from substantially centrally across the body. It is normally in this area that the attachment and rotation mechanism(s) to attach the eyeglasses to the mounting means are provided, either on the main body or on a central portion of the locating tongue.

It is further preferred that the locating tongue has a step or shoulder approximately halfway across its depth, approximately parallel to the forward edge of the visor or the main body. Normally, the shoulder is formed by providing an upwardly extending wall between a pair of rearwardly extending walls. The purpose of the shoulder or step is to abut the underside of the visor in order to locate the mounting means.

The locating tongue will preferably have an enlarged rear section extending outwardly towards the side edges of the body, such that the rear section is typically at least half the width of the assembly. Normally this enlarged rear section is behind the shoulder. The enlarged rear section preferably abuts the underside of the visor and stabilises the mounting portion and the eyeglass assembly when attached to the hard hat.

Due to its size and configuration, the locating tongue will preferably prevent pitch, roll and yaw of the mounting portion, and therefore of the eyeglass assembly, relative to the hard hat.

The mounting means also includes at least one deformable attachment portion and typically more than one. According to a preferred embodiment, deformable attachment portions are provided in pairs, one upper deformable portion provided above the visor in use and one lower deformable portion provided below the visor in use. Normally, two pairs of deformable attachment portions are provided, one pair on either side of the locating tongue.

Normally, the upper deformable attachment portion is an L-shaped member, having a portion extending upwardly from the main body and a second portion extending rearwardly. Typically, the upwardly extending portion is substantially vertical and the rearwardly extending portion is substantially horizontal. A foot portion will normally be provided at a rear end of the rearwardly extending portion at a lower level than the rearwardly extending portion in order to abut an upper surface of the visor.

Each upper deformable attachment portion is preferably provided adjacent to, but normally spaced from, the locating tongue.

Each lower deformable attachment portion will typically be provided in substantially the same plane as that of the main body. Normally, each lower deformable attachment portion is provided with an upper protrusion in order to abut an underside of the visor. Typically, the protrusion extends above the plane of the main body.

Preferably, each lower deformable attachment portion is elongate and is preferably formed by separating either side from the main body. Each lower deformable attachment portion is preferably located outside the upper attachment portion on either side of the mounting means.

Therefore, in use, the locating tongue is located under the visor with an upper attachment portion on either side thereof and a lower attachment portion on an outer side of each upper attachment portion. Forcing the mounting means rearwardly onto the visor, once the visor is between the respective free ends of the locating tongue and attachment portions, deforms of the attachment portions and/or the locating tongue as the visor passes and clamps the visor between the locating tongue and the respective attachment portions.

The deformability of the locating tongue and attachment portions will be due to the dimension of the material used rather than the material itself. Normally, the entire mounting means is manufactured from a substantially rigid plastic with the resilience or deformability of the locating tongue attachment portions due to the dimensions of the tongue and portions (length/width or thickness) providing them with limited elastic deformability. Provided that the locating tongue and attachment portions are not deformed beyond their yield point, their deformation will be elastic and resilient, thereby providing the clamping force.

There is typically one and potentially a pair of attachment and rotation mechanisms provided. Each of the attachment in rotation mechanisms are typically formed from at least two main components, namely a fixed component or attachment body which is attached to the mounting portion and a rotatable component or arm which is attached to the eyewear (or frame) and is rotatably associated with the fixed component.

Typically, the attachment body will be attached to the mounting portion using a retention means allowing for at least temporary attachment. The retention means may be provided with a shoulder portion standing proud of the mounting portion surface and which is receivable in a channel provided in the attachment body.

The attachment body typically extends downwardly substantially vertically from the mounting portion. At or adjacent a lower region of the attachment body will typically be a bore or similar which will allow engagement of the attachment body with the arm of the frame in a rotatable manner.

The rotation mechanism provided between the attachment body and the arm will typically rotate about a central axis which may be defined by a fastener or the like which also attaches be arm to the attachment body. One or more wear spacers or washers may be provided between the attachment body and the arm. Preferably a disc or cup spring is also provided between the where spacers or washes.

The washers and spring are preferably provided and maintained in their location and by a boss and sized to fit over the boss. A cover may be provided to ensure all further secure the location of the washers and spring. According to the most preferred embodiment, the cup spring is disposed between two washers.

The spacer washers and cup spring are disposed concentrically around the boss such that one of the washers abuts a face of the attachment body while the other washer abuts a face of the arm. Cup spring is disposed between the washers and when the arm is coupled to the attachment body, the cup spring exerts an axial biasing force along the axis of rotation, such that any rotational motion of arm relative to attachment body must overcome the resistance from the cup spring pressing against the two washers and faces. This mechanism will typically assist in maintaining the eyewear in either the use or storage condition.

In a much more particular form, the invention resides in a hard hat with an eyewear assembly as described hereinbefore attached thereto.

### Brief Description of the Drawings

The present invention will be better understood by referring to the accompanying drawings, wherein:
Figure 1 is an axonometric view of a hard hat with an eyeglass assembly in use according to a preferred embodiment.
Figure 2 is a front view of the hard hat and eyeglass assembly according to a preferred embodiment.
Figure 3 is a side view of a hard hat with an eyeglass assembly in use according to a preferred embodiment with the eyeglasses in the stored position.
Figure 4 is a front view of a hard hat with an eyeglass assembly in use according to a preferred embodiment with the eyeglasses in the use position.
Figure 5 is an exploded view from above of a hard hat and eyeglass assembly according to a preferred embodiment.
Figure 6 is a a front view of a hard hat with an eyeglass assembly in use according to a preferred embodiment with the eyeglasses in the stored position.
Figure 7 is an enlarged fragmentary view of a pivoting mechanism according to one possible configuration.
Figure 8 is a partial exploded view of the pivoting mechanism illustrated in Figure 7 and

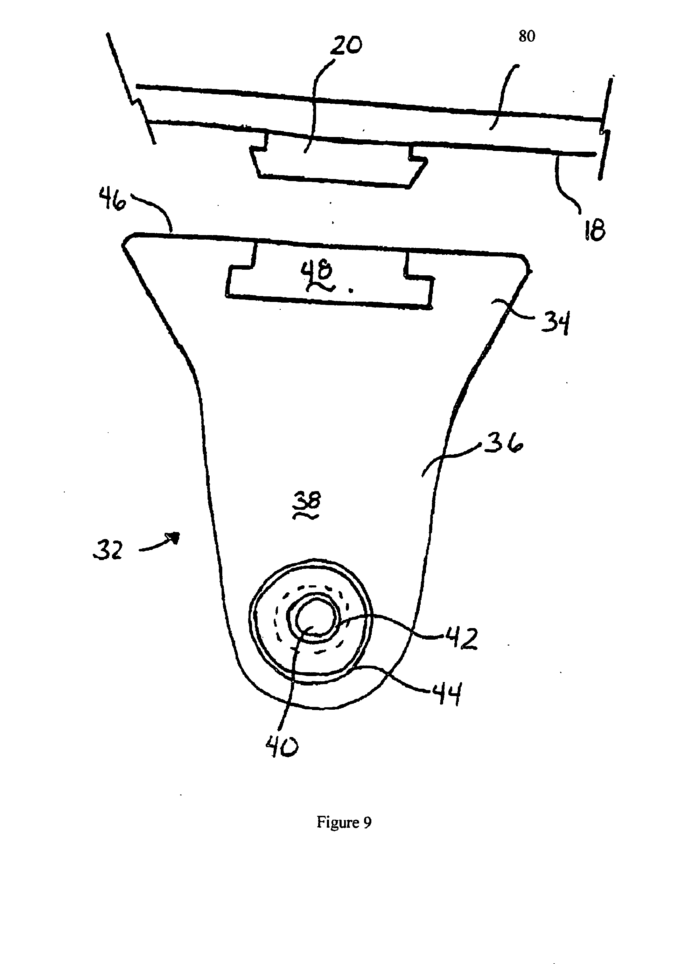

Figure 9 is a partial side view of the attachment base and mounting stud of the pivoting mechanism illustrated in Figures 8 and 9.
Figure 10 is an axonometric view of an alternative embodiment of the present invention.

### Detailed Description of the Preferred Embodiments

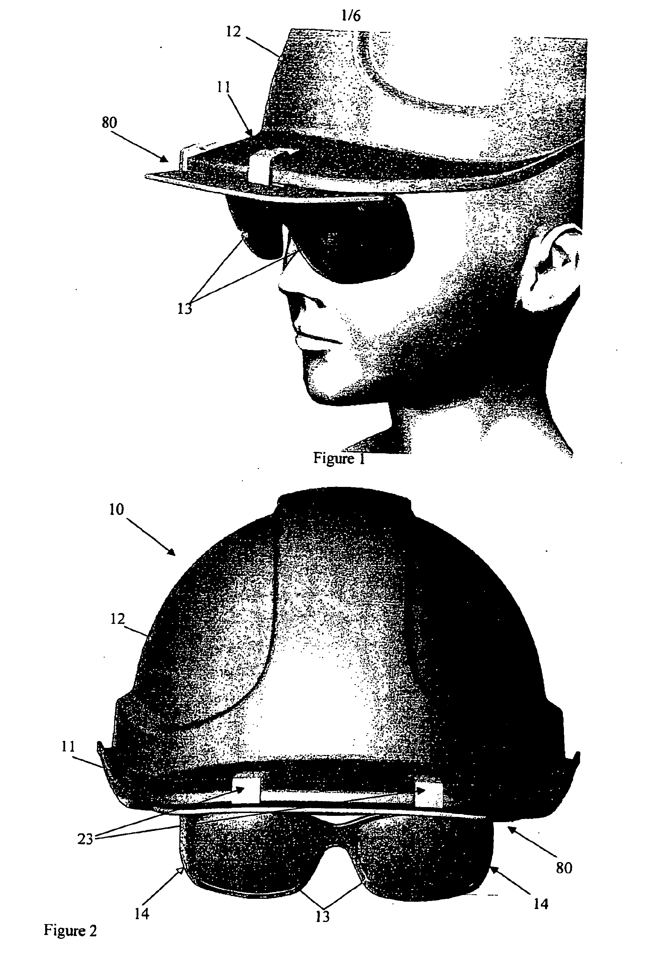

Referring to the drawings, Figure 1 illustrates a hard hat with an eyewear assembly according to a preferred embodiment.

According to the preferred embodiment illustrated in the Figures, the hard hat 10 includes a main body 12 and a visor 11 that projects from the front of the main body 12.

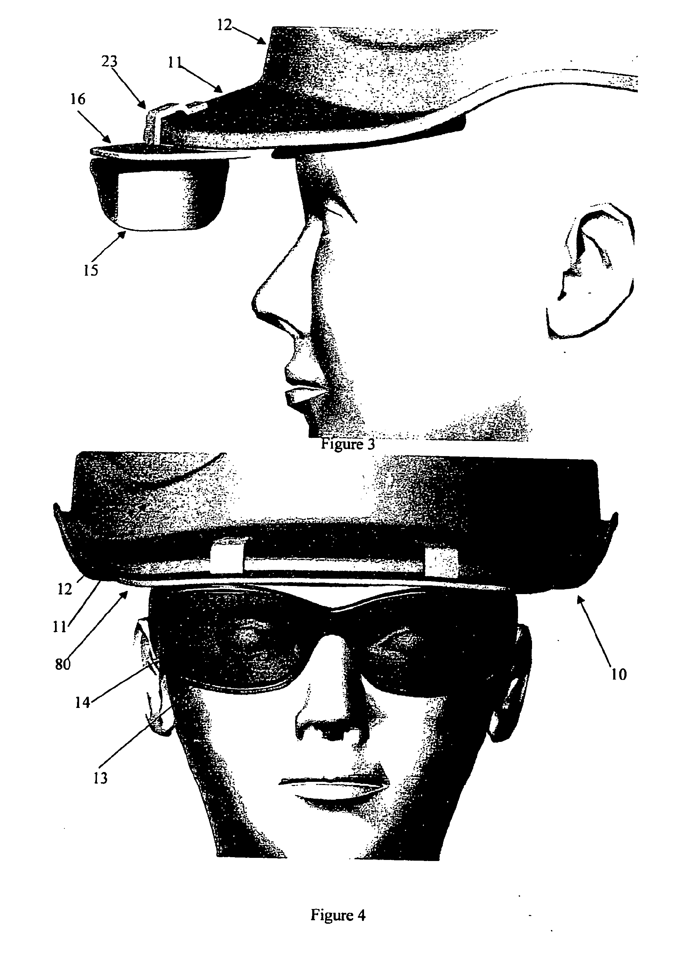

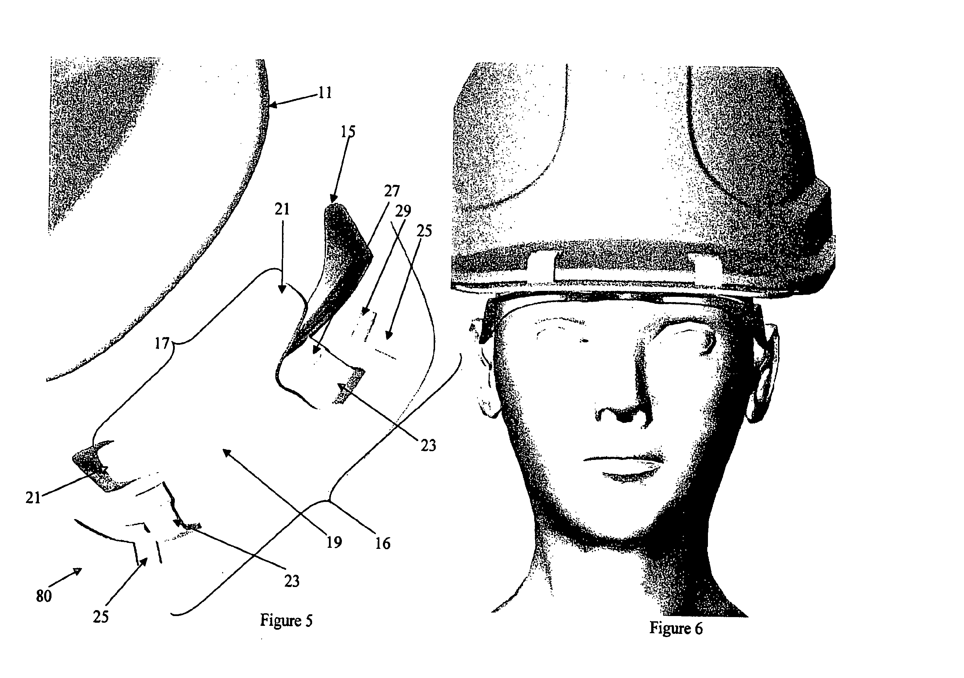

The eyewear assembly includes a pair of eyewear lenses 13 surrounded by a frame 14, a mounting means 80 to attach the set of eyewear to the hard hat 10 and attachment and rotation mechanisms attached to the mounting band to allow the eyewear to move relative to the mounting means 80 between a use position in front of a wearer's eyes as illustrated in Figures 1 and 3 and a stored position adjacent the visor 11 of the hard hat 10 as illustrated in Figures 3 and 6.

Visor 11 is curved so that the underside of the visor forms a generally concave shape away from a user's face. Visor 11 is formed from a thermo-set or thermoplastic material that is rigid.

The eyewear assembly illustrated is preferably formed as sunglasses, but other types of eyewear may be used instead. Eyewear has at least one lens 13 that are held to a frame 14. Frame 14 has a substantially conventional shape with the exception that the stems of conventional glasses are replaced with a pair of shortened arms that project from opposite sides of frame and which are each attached to the mounting means 80. The eyewear of the illustrated embodiment also has side extensions 15 to act as safety glasses.

The mounting means 80 includes an arcuate body 16 adapted to substantially correspond to the shape of the visor 11 of the hard hat 10, a rearwardly projecting locating tongue 17 and deformable attachment portions such that the mounting means 80 is clamped to the visor 11 of the hard hat 10 by the deformable attachment portions.

The body 16 of the mounting means 80 includes a substantially straight forward edge which in use will extend slightly forward of the front edge of the visor 11 as illustrated in Figure 1 in particular. The body 16 also includes arcuate corners and substantially straight side edges. The side edges are typically located beneath the visor of the hard hat, the overall width of the mounting means being less than the width of the visor 11 of the hard hat 10.

Normally, the visor 11 is slightly curved when viewed from the front and the body 16 is correspondingly curved. At least a portion of the upper surface of the body 16 abuts the underside of the visor 11.

The mounting means 80 includes a rearwardly projecting locating tongue 17 which preferably extends rearwardly from the body 16. Typically, the locating tongue 17 is positioned below the visor 11 when the assembly is attached to the hard hat 10.

According to the illustrated embodiment, the locating tongue 17 has a shoulder 19 approximately halfway across its depth. The shoulder 19 is formed by providing an upwardly extending wall between a pair of rearwardly extending walls. The purpose of the shoulder is to abut the underside of the visor 11 in order to locate the mounting means 80.

The locating tongue 17 has an enlarged rear section 21 extending outwardly towards the side edges of the body 16, such that the rear section 21 is typically at least half the width of the assembly. The enlarged rear section 21 preferably abuts the underside of the visor 11 and stabilises the mounting portion 80 and the eyeglass assembly when attached to the hard hat 10.

Due to its size and configuration, the locating tongue 17 prevents pitch, roll and yaw of the mounting portion 80 and therefore of the eyeglass assembly relative to the hard hat 10.

The mounting means 80 also includes deformable attachment portions According to the illustrated preferred embodiment, deformable attachment portions are provided in pairs, one upper deformable portion 23 provided above the visor 11 in use and one lower deformable portion 25 provided below the visor 11 in use. As illustrated in Figure 5 in particular, two pairs of deformable attachment portions are provided, one pair on either side of the locating tongue 17.

The upper deformable attachment portions 23 are an L-shaped member, having a portion extending upwardly from the main body 16 and a second portion extending rearwardly. Typically, the upwardly extending portion is substantially vertical end of the rearwardly extending portion is substantially horizontal. A foot portion 27 is provided at a rear end of the rearwardly extending portion at a lower level than the rearwardly extending portion in order to abut an upper surface of the visor 11 as illustrated.

Each upper deformable attachment portion 23 is provided adjacent to, but normally spaced from the locating tongue 17.

Each lower deformable attachment portion 25 is provided in substantially the same plane as that of the main body 16. Normally, each lower deformable attachment portion 25 is provided with an upper protrusion 29 in order to abut an underside of the visor 11 the protrusion extending above the plane of the main body 16.

Each lower deformable attachment portion 25 is elongate and formed by separating either side from the main body 16. Each lower deformable attachment portion 25 is located outside the upper attachment portion 23 on either side of the mounting means 80.

In use, the locating tongue 17 is located under the visor 11 with the upper attachment portion 23 on either side thereof and a lower attachment portion 25 on an outer side of each upper attachment portion 23. Forcing the mounting means 80 rearwardly onto the visor 11, once the visor 11 is between the respective free ends of the locating tongue 17 and attachment portions 23, 25, deforms the attachment portions 23, 25 and/or the locating tongue 17 as the visor 11 passes and clamps the visor 11 between the locating tongue 17 and the respective attachment portions 23, 25.

As shown best in Figures 6 to 8, each arm 26 projects up and away from frame 24. Further, each arm 26 terminates at a generally cylindrical end 28. Ends 28 are positioned such that faces 30 are parallel to each other and cylindrical ends 28 are axially aligned. Arms 26 are preferable integrally formed with the rest of frame 24, but may be coupled to the frame in a conventional manner.

The eyewear assembly 14 also includes a pair of attachment bodies 32. Each body 32 includes a generally flat coupling portion 34 and a pivot arm 36 that extends from one end of portion 34.

Pivot arm 36 projects away from coupling portion 34 and includes a flat outer face 38. A through-bore 40 passes through arm 36 perpendicular to face 38. An annular wall or boss 42 extends from face 38 concentric to bore 40. A second outer annular wall or cover 44 also extends from face 38 concentric to boss 42 and bore 40. In the preferred embodiment, boss 42 extends further from face 38 than cover 44. Additionally, bore 40 may be enlarged at the end opposite to face 38 to allow the head of a fastener 45 to be countersunk within the arm 36.

Further, portion 34 of attachment body 32 has a flat upper surface 46 that has a recessed channel 48. Channel 48 passes through face 38 and is shaped complementary to retention stud 20 and is sized to slidably receive stud 20. Channel 48 terminates prior to passing completely through the length of portion 34, leaving a stop portion 50.

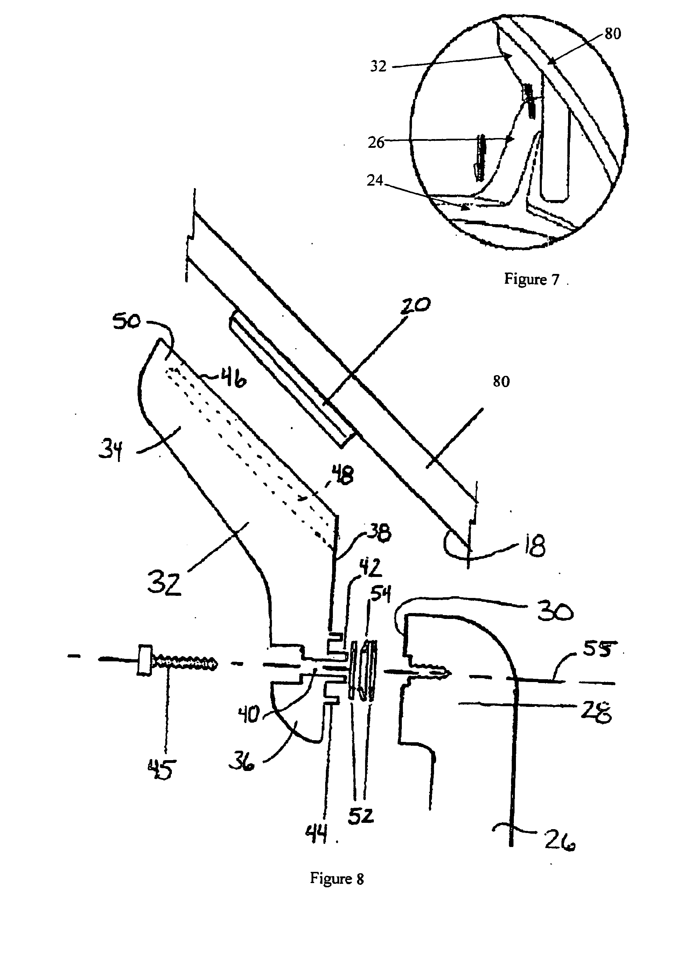

As shown in Figure 7, the eyewear assembly 14 also includes a pair of wear spacers or washers 52 and a disc or cup spring 54. The washers 52 and spring 54 are sized to fit over boss 42 and within cover 44. Cup spring 54 is disposed between the two washers 52.

Attachment blocks 32 are pivotally coupled to the two arms 26 at their respective cylindrical ends 28 by a conventional fastener 45, such as a self-tapping screw, that passes through bore 40 and into face 30. The spacer washers 52 and cup spring 54 are disposed concentrically around boss 42 such that one of the washers abuts face 38 while the other washer abuts face 30. Cup spring 54 is disposed between the washers and when arm 26 is coupled to pivot arm 36 by fastener 45, cup spring 54 exerts an axial biasing force along the axis of rotation 55, such that any rotational motion of arm 26 relative to attachment body 32 must overcome the resistance from the cup spring pressing against the two washers 52 and faces 30, 38.

The washers 52 are formed from a strong wear-resistant material, such as steel and are effective to receive the pressure exerted by spring 54 and transfer that pressure to the faces 30, 38 without deforming. In the preferred embodiment, fastener 45 is fixedly coupled to arm 26 and pivots with arm 26 (and frame 24) about the centreline of bore 40.

Pivot arms 36 project from body 32 at an angle such that, when body 32 is coupled to retention stud 20, face 38 is substantially vertical and bore 40 is horizontal (relative to the ground when headwear 10 is worn in a conventional manner).

Attachment bodies 32 are removably coupled to the two retention studs 20 by sliding each of the bodies 32 in an inside-out direction, such that the stud 20 passes through the T-shaped channel 48 opening in face 38. Body 32 is slid along stud 20 until the end of stud 20 abuts stop 50.

It should be appreciated that the molded curve of visor 16 and its coextensive retention studs 20 cooperate with the opposite facing openings of channels 48 to create a constant pressure between studs 20 and attachment bodies 32 thereby holding glasses 14 to cap 12. That is, as best shown in Figures 2 and 3, visor 16 and frame 24 are both curved or arcuate and in one embodiment, the radius (relative to a point below the visor) of visor 16 is smaller than the radius of the arcuatly-shaped spectacle frame 24. Further, studs 20 are spaced apart a distance that is slightly less than the distance between stops 50. In this manner, the arcuate shape of visor 16 and frame 24 cause frame 24 to be compressed and visor 16 (through studs 20) is in tension.

Spring 54 exerts axial force against the pivoting portions (i.e., arms 26, 36) to sufficiently increase the frictional resistance to rotational movement to hold the arms 26 and frame 24 in substantially any selected position. As shown in Figures 1 and 3, this position can be a deployed position where the lenses 22 are disposed in front of a user's eyes (when headwear 10 is being worn in a conventional manner). The glasses 14 can be rotated in the direction of arrow 52 to a stowed position shown in Figures 3 and 5 where the glasses 14 underlie the visor 16, such that the front-most surfaces of frame 14 and lenses 22 are adjacent underside 18.

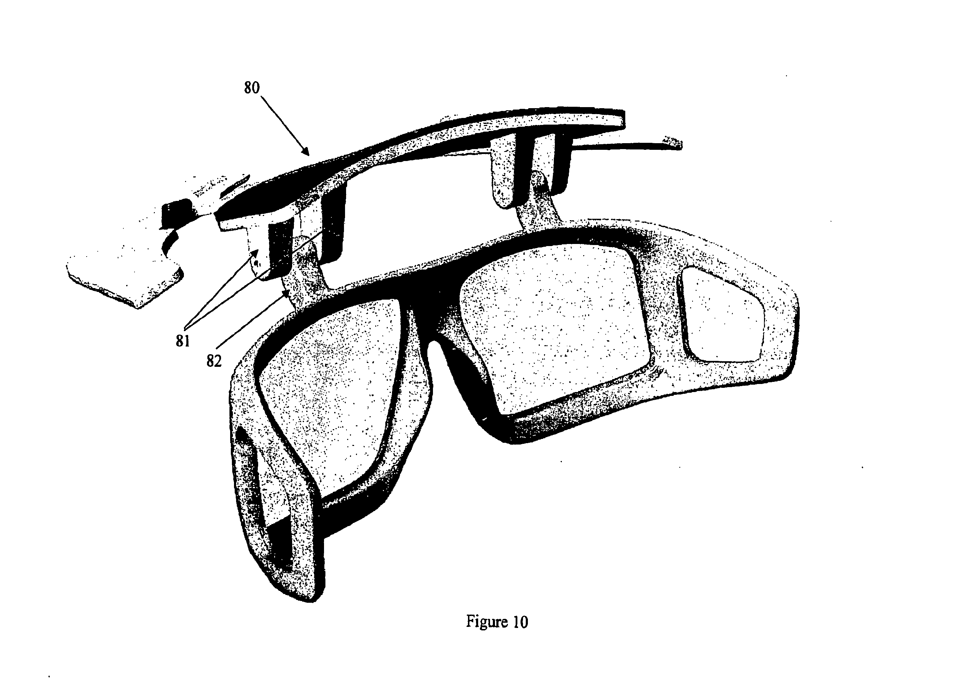

The alternative embodiment illustrated in Figure 10 includes a pair of eyewear lenses 13 surrounded by a frame 14, a mounting means 80 to attach the set of eyewear to the hard hat 10 and attachment and rotation mechanisms attached to the mounting means 80 to allow the eyewear to move relative to the mounting means 80 between a use position in front of a wearer's eyes. The configuration of the mounting means of this embodiment is the same as the embodiment illustrated earlier. However, the attachment and rotation mechanisms are slightly different and more simple in this embodiment.

The attachment and rotation mechanisms (of which there are two illustrated), each include a pair of downwardly extending protrusions 81 from the mounting means 80 which receive a single extension 82 from the frame of the eyewear therebetween. An elongate pin (obscured) extending through both downwardly extending protrusions 81 and the single extension 82 provides a pivot about which the eyewear lenses 13 can rotate between the use and storage positions.

In the present specification and claims (if any), the word "comprising" and its derivatives including "comprises" and "comprise" include each of the stated integers but does not exclude the inclusion of one or more further integers.

Reference throughout this specification to "one embodiment" or "an embodiment" means that a particular feature, structure, or characteristic described in connection with the embodiment is included in at least one embodiment of the present invention. Thus, the appearance of the phrases "in one embodiment" or "in an embodiment" in various places throughout this specification are not necessarily all referring to the same embodiment. Furthermore, the particular features, structures, or characteristics may be combined in any suitable manner in one or more combinations.

## Claims

1. An eyewear assembly for attachment to a hard hat (10), the hard hat including a main body (12) and a visor (11), the eyewear assembly including at least one eyewear member (14), a mounting means (80) to attach the eyewear member to the hard hat (10) including an arcuate body (16) adapted to substantially correspond to the shape of the visor of the hard hat, a rearwardly projecting locating tongue (17) and at least one deformable attachment portion (23, 25) such that the mounting means is clamped to the visor of the hard hat by the at least one deformable attachment portion and at least one rotation mechanism (36) associated with the mounting means and the eyewear member to allow movement of the at least one eyewear member relative to the at least one mounting means between a use position in front of a wearer's eyes and a stored position adjacent the visor (11) of the hard hat (10).

2. An eyewear assembly for attachment to a hard hat as claimed in claim 1 wherein the body of the mounting means includes a substantially straight forward edge, which in use, extends forwardly of the visor, arcuate corners and substantially straight side edges, the side edges located beneath the visor of the hard hat, with the overall width of the mounting means being less than the width of the visor of the hard hat.

3. An eyewear assembly for attachment to a hard hat as claimed in claim 1 or claim 2 wherein the body of the mounting means is substantially coplanar with the visor of hard hat.

4. An eyewear assembly for attachment to a hard hat as claimed in any one of the preceding claims wherein if the visor of the hard hat is curved when viewed from the front than the body of the mounting means is correspondingly curved such that at least a portion of an upper surface of the body of the mounting means will abut an underside of the visor.

5. An eyewear assembly for attachment to a hard hat as claimed in any one of the preceding claims wherein the locating tongue is positioned below the visor when the mounting means is attached to the hard hat.

6. An eyewear assembly for attachment to a hard hat as claimed in any one of the preceding claims wherein the locating tongue extends rearwardly from substantially centrally across the body of the mounting means.

7. An eyewear assembly for attachment to a hard hat as claimed in any one of the preceding claims wherein the locating tongue has a shoulder approximately halfway across its depth, approximately parallel to a forward edge of the visor or the main body.

8. An eyewear assembly for attachment to a hard hat as claimed in any one of the preceding claims wherein the locating tongue has an enlarged rear section extending outwardly towards side edges of the body, such that the rear section is at least half the width of the assembly.

9. An eyewear assembly for attachment to a hard hat as claimed in any one of the preceding claims wherein at least a pair of deformable attachment portion is provided, one upper deformable portion provided above the visor of the hard hat in use and one lower deformable portion provided below the visor of the hard hat in use.

10. An eyewear assembly for attachment to a hard hat as claimed in claim 9 wherein two pairs of deformable portions are provided, one pair on either side of the locating tongue.

11. An eyewear assembly for attachment to a hard hat as claimed in claim 9 or claim 10 wherein each upper deformable portion is an L-shaped member, having a portion extending upwardly from the body of the mounting means and a second portion extending rearwardly.

12. An eyewear assembly for attachment to a hard hat as claimed in claim 11 wherein a foot portion is provided at a rear end of the rearwardly extending portion at a lower level than the rearwardly extending portion in order to abut an upper surface of the visor of the hard hat.

13. An eyewear assembly for attachment to a hard hat as claimed in any one of claims 9 to 12 wherein each upper deformable portion is provided adjacent to, but spaced from, the locating tongue.

14. An eyewear assembly for attachment to a hard hat as claimed in any one of claims 9 to 12 wherein each lower deformable portion is provided in substantially the same plane as that of the body of the mounting means.

15. An eyewear assembly for attachment to a hard hat as claimed in claim 14 wherein each lower deformable portion is provided with an upper protrusion in order to abut an underside of the visor of the hard hat.

## Patentansprüche

1. Eine Brillezusammenstellung für Befestigung an einem harten Hut (10), der harte Hut umfassend einen Hauptkörper (12) und einen Schirm (11), die Brillezusammenstellung umfassend mindestens einen Brillesteil (14), ein Befestigungsmittel (80) für Befestigung des Brillesteiles zu dem harten Hut (10) umfassend einen bogenförmigen Körper (16) angepasst der Form des Schirmes des harten Hutes zu entsprechen, eine nach hinten vorstehende Fixierszunge (17) und mindestens einen verformbaren Befestigungsteil (23, 25), so, dass das Befestigungsmittel zu dem Schirm des harten Hut mit dem mindestens einem verformbaren Befestigungsteil und mit mindestens einem Drehmechanismus (36), der mit dem Befestigungsmittel und mit dem Brillesteil verbunden ist , befestigt ist, um Bewegung des mindestens eines Brillesteiles zu ermöglichen, relativ zu dem mindestens einem Befestigungsmittel, zwischen Gebrauchsstellung vor den Augen des Trägers und einer lagerten Stellung angrenzend den Schirm (11) des harten Hutes (10).

2. Eine Brillezusammenstellung für Befestigung an einem harten Hut nach Anspruch 1, wobei der Körper des Befestigungsmittels eine im wesentlichen gerade Vorderkante, die sich, im Gebrauch, vor dem Schirm erstreckt, bogenförmige Ecken und am wesentlichen gerade Seitenkanten umfasst, die Seitenkanten sich unter dem Schirm des harten Hutes befinden; die gesamte Breite des Befestigungsmittels kleiner als die Breite des Schirmes des harten Hutes ist.

3. Eine Brillezusammenstellung für Befestigung an einem harten Hut nach Anspruch 1 oder Anspruch 2, wobei der Körper des Befestigungsmittels im wesentlichen koplanar mit dem Schirm des harten Hutes ist.

4. Eine Brillezusammenstellung für Befestigung an einem harten Hut nach einem der vorhergehenden Ansprüche, wobei, wenn der Schirm des harten Hutes, wenn von vorne betrachtet, gekrümmt ist, der Körper des Befestigungsmittels ist auch entsprechend gekrümmt so dass mindestens ein Teil oberer Oberfläche des Körpers des Befestigungsmittels die Unterseite des Schirmes grenzt.

5. Eine Brillezusammenstellung für Befestigung an einem harten Hut nach einem der vorhergehenden Ansprüche, wobei, wenn das Befestigungsmittel zu dem harten Hut befestigt ist, die Fixierszunge unter dem Schirm positioniert ist.

6. Eine Brillezusammenstellung für Befestigung an einem harten Hut nach einem der vorhergehenden Ansprüche, wobei die Fixierszunge sich nach hinten von am wesentlichen zentral über dem Körper des Befestigungsnittels erstreckt.

7. Eine Brillezusammenstellung für Befestigung an einem harten Hut nach einem der vorhergehenden Ansprüche, wobei die Fixierszunge eine Schulter etwa in der Mitte über ihre Tiefe hat, zunächst parallel mit der Vorderkante des Schirmes oder des Hauptkörpers.

8. Eine Brillezusammenstellung für Befestigung an einem harten Hut nach einem der vorhergehenden Ansprüche, wobei die Fixierszunge eine vergrösserte hintere Sektion hat, die sich nach aussen zu den Seitenkanten des Körpers erstreckt, so dass die hintere Sektion mindestens die Hälfte der Breite der Zusammensetzung ist.

9. Eine Brillezusammenstellung für Befestigung an einem harten Hut nach einem der vorhergehenden Ansprüche, wobei mindestens ein Paar von verformbaren Befestigungsteilen vorgesehen ist, ein oberer verformbarer Teil, der oberhalb des Schirmes des harten Hutes im Gebrauch vorgesehen ist und ein niedriger verformbarer Teil, der unter dem Schirm des harten Hutes im Gebrauch vorgesehen ist.

10. Eine Brillezusammenstellung für Befestigung an einem harten Hut nach Anspruch 9, wobei zwei Paare von verformbaren Teilen vorgesehen sind, ein Paar auf jeder Seite der Fixierszunge.

11. Eine Brillezusammenstellung für Befestigung an einem harten Hut nach Anspruch 9 oder Anspruch 10, wobei jeder obere verformbare Teil ein L-förmiges Element ist, das einen Teil, der sich nach oben von dem Körper des Befestigungsmittels erstreckt, und zweiten Teil, der sich nach hinten erstreckt, umfasst.

12. Eine Brillezusammenstellung für Befestigung an einem harten Hut nach Anspruch 11, wobei ein Fussteil an einem hinteren Ende des nach hinten erstreckenden Teiles auf einem niedrigeren Niveau als der nach hinten erstreckende Teil, vorgesehen ist , um die Oberfläche des Schirmes des harten Hutes zu grenzen.

13. Eine Brillezusammenstellung für Befestigung an einem harten Hut nach einem der Ansprüche 9-12, wobei jeder obere verformbare Teil benachbart zu, aber beabstandet von der Fixierszunge, vorgesehen ist.

14. Eine Brillezusammenstellung für Befestigung an einem harten Hut nach einem der Ansprüche 9-12, wobei jeder niedrigere verformbare Teil in einer im wesentlichen derselben Ebene wie die des Körpers des Befestigungsmittels, vorgesehen ist.

15. Eine Brillezusammenstellung für Befestigung an einem harten Hut nach Anspruch 14, wobei jeder niedrigere verformbare Teil mit einem oberen Vorsprung vorgesehen ist, um die Unterseite des Schirmes des harten Hutes zu grenzen.

## Revendications

1. Assemblage de lunetterie pour attachement à un casque de sûreté (10), le casque de sûreté incluant un corps principal (12) et une visière (11), l'assemblage de lunetterie incluant au moins un membre de lunetterie (14), un moyen de montage (80) pour attacher le membre de lunetterie au casque de sûreté (10) incluant un corps arqué (16) adapté pour correspondre essentiellement à la forme de la visière du casque, une patte de disposition en projection arrière (17) et au moins une portion d'attachement déformable (23, 25) de sorte que le moyen de montage soit enserré à la visière du casque de sûreté par l'au moins une portion d'attachement déformable, et au moins un mécanisme de rotation (36) associé avec le moyen de montage et le membre de lunetterie pour permettre un mouvement du au moins un membre de lunetterie par rapport au au moins un moyen de montage entre une position d'usage devant les yeux du porteur et une position de remisage adjacente à la visière (11) du casque de sûreté (10).

2. Assemblage de lunetterie pour attachement à un casque de sûreté selon la revendication 1, dans lequel le corps du moyen de montage inclut un bord avant essentiellement rectiligne, qui en usage s'étend en avant de la visière, des coins arqués et des bords latéraux essentiellement rectilignes, les bords latéraux situés sous la visière du casque de sûreté, avec la largeur totale du moyen de montage étant inférieure à la largeur de la visière du casque de sûreté.

3. Assemblage de lunetterie pour attachement à un casque de sûreté selon la revendication 1 ou la revendication 2, dans lequel le corps du moyen de montage est essentiellement coplanaire avec la visière du casque de sûreté.

4. Assemblage de lunetterie pour attachement à un casque de sûreté selon l'une des revendications précédentes dans lequel, si la visière du casque de sûreté est courbe lorsque observée en vue de face, alors le corps du moyen de montage est de même courbe, de sorte qu'au moins une portion d'une surface supérieure du corps du moyen de montage s'adosse à une face inférieure de la visière.

5. Assemblage de lunetterie pour attachement à un casque de sûreté selon l'une des revendications précédentes, dans lequel la patte de disposition est située sous la visière lorsque le moyen de montage est attaché au casque de sûreté.

6. Assemblage de lunetterie pour attachement à un casque de sûreté selon l'une des revendications précédentes, dans lequel la patte de disposition s'étend en arrière à partir d'une position essentiellement centrée par rapport au corps du moyen de montage.

7. Assemblage de lunetterie pour attachement à un casque de sûreté selon l'une des revendications précédentes, dans lequel la patte de disposition possède un épaulement approximativement au milieu sur sa profondeur, approximativement parallèle à un bord avant de la visière ou du corps principal.

8. Assemblage de lunetterie pour attachement à un casque de sûreté selon l'une des revendications précédentes, dans lequel la patte de disposition possède une section arrière élargie s'étendant vers l'extérieur vers lesdits bords du corps, de sorte que la section arrière représente au moins la moitié de la largeur de l'assemblage.

9. Assemblage de lunetterie pour attachement à un casque de sûreté selon l'une des revendications précédentes, dans lequel au moins une paire de portions d'attachement déformables est fournie, une portion déformable supérieure au-dessus de la visière du casque de sûreté en usage et une portion déformable inférieure sous la visière du casque de sûreté en usage.

10. Assemblage de lunetterie pour attachement à un casque de sûreté selon la revendication 9, dans lequel deux paires de portions d'attachement déformables sont fournies, une paire de chaque côté de la patte de disposition.

11. Assemblage de lunetterie pour attachement à un casque de sûreté selon la revendication 9 ou la revendication 10, dans lequel chaque portion déformable est un membre en forme de L, possédant une portion en extension vers le haut par rapport au corps du moyen de montage et une deuxième portion en extension vers l'arrière.

12. Assemblage de lunetterie pour attachement à un casque de sûreté selon la revendication 11, dans lequel une portion de support est fournie à une extrémité arrière de la portion en extension ver l'arrière, à un niveau inférieur à la portion en extension vers l'arrière, de sorte à s'adosser à une surface supérieure de la visière du casque de sûreté.

13. Assemblage de lunetterie pour attachement à un casque de sûreté selon l'une des revendications 9 à 12, dans lequel chaque portion déformable supérieure est fournie adjacente à, mais distante vis-à-vis de, la patte de disposition.

14. Assemblage de lunetterie pour attachement à un casque de sûreté selon l'une des revendications 9 à 12, dans lequel chaque portion déformable inférieure est fournie dans essentiellement le même plan que celui du corps du moyen de montage.

15. Assemblage de lunetterie pour attachement à un casque de sûreté selon la revendication 14, dans lequel chaque portion déformable inférieure est dotée d'une protrusion supérieure de sorte à adosser une face inférieure de la visière de la visière du casque de sûreté.
